# EUROPÄISCHE PATENTSCHRIFT

(11) **EP 0 578 168 B1**
(45) Veröffentlichungstag und Bekanntmachung des Hinweises auf die Patenterteilung: **25.09.1996**
(21) Anmeldenummer: 93110719.7
(22) Anmeldetag: 05.07.1993
(51) Int. Cl.: F16K 7/16, F16K 39/02

(54) **Ventil**
Valve
Valve

(30) Priorität: 09.07.1992 DE 4222594
(43) Veröffentlichungstag der Anmeldung: 12.01.1994
(73) Patentinhaber: AVS Ing. J.C. Römer GmbH, D-82064 Strasslach-Dingharting (DE)
(72) Erfinder: Römer, Joachim C., D-8023 Pullach (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 341 340
- DE-A- 3 334 158
- DE-A- 3 334 159
- DE-A- 3 334 160
- GB-A- 2 163 834
- US-A- 3 683 962

## Beschreibung

Die Vorliegende Erfindung betrifft ein Ventil, bestehend aus einem Ventilgehäuse, aus einem im Gehäuse um eine Kippachse kippbar angeordneten Ventilglied das zum Schließen bzw. Freigeben von auf entgegengesetzten Seiten der Kippachse in einem von einem Einlaß zu einem Auslaß führenden Strömungskanal angeordneten Ventilöffnungen dient, wobei die im Betrieb an den Ventilöffnungen herrschenden Drücke Kippmomente auf das Ventilglied ausüben, und aus auf beiden Seiten der Kippachse angeordneten Kompensationskippmomente auf das Ventilglied bewirkenden Einrichtungen, wobei die genannten Kippmomente und Kompensationskippmomente in allen Stellungen des Ventilglieds einander zumindest im wesentlichen aufheben, sowie aus einer das Ventilglied ansteuernde, dieses zu einer Kippbewegung veranlassende Betätigungseinrichtung.

Ein Magnetventil dieser Art ist aus der DE-C-33 34 158 bekannt. Ähnliche Magnetventile gehen auch aus der DE-A-33 34 159 sowie aus der DE-A-33 34 160 hervor.

Bei diesen bekannten Magnetventilen hat das Ventilglied in etwa eine T-förmige Gestalt mit einem mittleren Schenkel und zwei seitlichen Armen. Der Schenkel ist beidseitig mit einem nachgiebigen, vorzugsweise elastischen Schließelement versehen, das wahlweise, je nach Erregungszustand des das Ventilglied betätigenden Elektromagneten eine von zwei auf entgegengesetzten Seiten des Schenkels angeordneten, voneinander einen Abstand aufweisenden und einander zugewandten Ventilöffnungen des Ventilgehäuses abschließt. Jede Ventilöffnung kommuniziert mit einer unterhalb eines jeweiligen Armes des T-förmigen Ventilglieds mündenden seitlichen Öffnung und die Kompensationseinrichtungen bildenden Übertragungsgliedern.

Wird angenommen, daß der Schenkel des Ventilglieds die eine Ventilöffnung schließt, so bewirkt der Druck an dieser Öffnung ein erstes Drehmoment auf das Ventilglied. Da diese Öffnung mit einer seitlichen Öffnung unterhalb des auf der gleichen Seite der Kippachse angeordneten Armes des Ventilgliedes angeordneten seitlichen Öffnung kommuniziert, bewirkt der gleiche Druck der an der geschlossenen Ventilöffnung ansteht, ein dem ersten Drehmoment entgegengesetztes Kippmoment auf das Ventilglied. Durch entsprechende Gestaltung der Hebelarme und Öffnungsquerschnitte gelingt es, die zwei Kippmomente gleich groß zu gestalten, so daß sie einander aufheben. In diesem Zustand ist die andere Ventilöffnung offen, es herrschen aber dennoch entsprechende Verhältnisse auf dieser Seite des Ventilgliedes, so daß auch hier die beiden Kippmomente einander im wesentlichen aufheben.

Der Schenkel befindet sich in einem Verbindungsraum zwischen den beiden einander gegenüberliegenden Ventilöffnungen, wobei dieser Verbindungsraum zum Strömungskanal gehört. Das heißt, bei dieser Ausführung führt der Strömungskanal vom Einlaß des Ventils durch die erste Ventilöffnung hindurch durch den Verbindungsraum und durch die zweite Ventilöffnung zum Auslaß des Ventils. Wird das Ventilglied aus der geschlossenen Stellung bei der die erste Ventilöffnung geschlossen während die zweite Ventilöffnung geöffnet ist, in eine mittlere Stellung bewegt, bei der das Ventilglied weder die erste Öffnung noch die zweite Öffnung schließt, so ist eine Durchströmung des Ventils möglich. Es ist auch möglich, eine weitere Verbindung von außen an dem Verbindungsraum zu erzeugen. Hierdurch wird ein 3/2-Wegventil geschaffen. Die Möglichkeit besteht auch, die zweite Ventilöffnung durch den Schenkel schließen zu lassen. In diesem Fall ist eine Verbindung zwischen der Einlaßseite des Ventils und den Verbindungsraum bzw. einen an diesem Ringraum angeschlossenen Verbraucher gegeben, eine Verbindung zu dem am Auslaß des Ventils angeschlossenen Verbraucher jedoch unterbrochen.

Der Vorteil einer derartigen Anordnung liegt insbesondere darin, daß die Betätigungskraft die erforderlich ist, um das Ventilglied von der einen Schaltstellung in die andere Schaltstellung zu kippen, weitestgehend unabhängig von den Betriebsdrücken ist, da die im Betrieb herrschenden Drücke stets zu Kippmomenten führen, die ausgeglichen sind. Somit muß die Betätigungseinrichtung im wesentlichen nur Reibung überwinden und Verformungsarbeit für die verwendete Membran leisten. Die Betätigungskraft kann somit sehr klein gehalten werden, was zu einer kompakten Bauweise des Elektromagneten führt.

Bei der aus der DE-C-33 34 158 bekannten Vorrichtung sind die Übertragungsglieder als zylindrische Stifte ausgebildet, welche in seitliche Bohrungen gleiten und sich durch jeweilige Ringdichtungen hindurcherstrecken, so daß sich die in den jeweiligen Bohrungen herrschenden Drücke auf die Arme des T-förmigen Ventilglieds übertragen werden. Etwas problematisch bei dieser Anordnung ist, daß sich Reibungseffekte zwischen den Bohrungen und den Stiften nachteilig auswirken können, wobei die Höhe der auftretenden Reibung sich im Betrieb ändern kann, beispielsweise aufgrund von mechanischem Verschleiß einerseits und Verklemmungen andererseits, und daß die eingesetzten Dichtungen im Lauf der Zeit zu Leckagen führen können.

Zwar ist in der DE-C-33 34 158 der Vorschlag enthalten, daß die Kolben, d.h. die Stifte welche die Übertragungsglieder der Kompensationseinrichtungen darstellen, auch durch Balg- oder Membransysteme ersetzt werden können, z.B. dann, wenn Dichtungsreibung unerwünscht ist. Dennoch ist der Aufbau aller in den drei Schriften genannten Magnetventilen relativ kompliziert und es entstehen auch Probleme dadurch, daß die Ventilgehäuse zweigeteilt werden müssen, und zwar um eine mittlere Längsachse, wodurch kostspielige Herstellungsverfahren verwendet werden müssen, um eine gute Abdichtung zwischen den beiden Gehäusehälften zu erreichen. Diese zweiteilige Ausbildung ist aber bei den genannten Schriften notwendig, um eine präzise Bearbeitung der einander zugewandten Ventilöffnungen sicherzustellen.

Die Aufgabe der vorliegenden Erfindung ist es, ein Ventil der eingangs genannten Art so auszubilden, daß eine äußerst kompakte, in der Herstellung leicht zu realisierende Bauweise erreicht wird, wobei die von der Betätigungseinrichtung zu überwindende Reibung minimiert werden soll, so daß auch hier mit kleinen Betätigungskräften gearbeitet werden kann.

Weiterhin soll das erfindungsgemäße Ventil sich insbesondere für die Betätigung durch einen Elektromagneten eignen, wobei aber andere Betätigungseinrichtungen ohne weiteres verwendet werden können. Beispielsweise kann das erfindungsgemäße Ventil für die Umsteuerung eines hydraulischen oder pneumatischen Antriebs dienen, beispielsweise dadurch, daß ein auf einem Kolben des Antriebs angebrachter Anschlag das erfindungsgemäße Ventil betätigt und hierdurch den Antrieb umsteuert.

Zur Lösung dieser Aufgaben wird erfindungsgemäß vorgesehen, daß sowohl die Ventilöffnungen als auch die Kompensationseinrichtungen in einer Ebene liegen.

Daß es auf diese Weise gelingt, die auf das Ventilglied einwirkenden Kippmomente auszugleichen, ist zunächst überraschend.

Eine einfache Möglichkeit, diesen Ausgleich zu erreichen, besteht darin, daß die Kompensationseinrichtungen aus einer ersten auf der Auslaßseite des Ventils angeordneten, mit dem Druck auf der Einlaßseite des Ventils beaufschlagen Einrichtung sowie aus einer zweiten auf der Einlaßseite des Ventils angeordneten, mit dem Druck auf der Auslaßseite des Ventils beaufschlagten Einrichtung bestehen.

Die Anordnung mit den Ventilöffnungen sowie die Kompensationseinrichtungen in einen Ebene führt, wie aus der nachfolgenden Beschreibung ersichtlich wird, zu ausgeprägten Herstellungsvorteilen. Auch die Druckbeaufschlagung der Kompensationseinrichtung auf der Auslaßseite mit dem auf der Einlaßseite herrschenden Druck und umgekehrt kann elegant gelöst werden. Ein Vorteil der in einer Ebene angeordneten Ventilöffnungen und Kompensationseinrichtungen liegt darin, daß die die Ventilöffnungen umgebenden Ventilsitze sowie die Bohrungen, welche zur Aufnahme der Kompensationseinrichtungen dienen bzw. diese bilden, alle von einer Seite aus bearbeitet werden können und leicht zugänglich sind. Weiterhin genügt eine einzige Membran, um die Teile des Ventilgehäuses abzudichten und um eine wirksame Trennung zwischen dem Arbeitsfluid und dem Betätigungsteil des Ventils sicherzustellen.

Bei einer besonders bevorzugten Ausführung besteht das Ventil aus einem unteren Gehäuseteil, welches die Einlaßöffnung, die Auslaßöffnung, den Strömungskanal, die Ventilöffnungen und die Kompensationseinrichtungen enthält, und aus einer die Ventilöffnungen und die Kompensationseinrichtungen überdeckenden Membran sowie aus einem oberen die Membran gegen den unteren Gehäuseteil haltenden, das Ventilglied enthaltenden und die Kippachse bestimmenden oberen Gehäuseteil. Bei dieser Ausführungsform kann die Membran insbesondere scheibenförmig ausgebildet und kostengünstig aus Blattmaterial gestanzt werden. Die Membran kann aber auch mit Vorteil als Spritzgußteil geformt werden, insbesondere dann, wenn es erwünscht wird, bestimmte Wulste oder andere Merkmale auf der Membran zu formen, was aber nicht unbedingt erforderlich ist.

Mit dieser Konstruktion bildet die Membran eine vollkommene Trennung zwischen dem unteren durchströmten Gehäuseteil und dem oberen das Ventilglied enthaltende "Betätigungs"-Teil des Gehäuses. Da das Betätigungsteil des Gehäuses vom Arbeitsmedium abgedichtet ist, ist eine Festsetzung dieses Teils mit dem Arbeitsmedium bzw. mit in diesem vorhandenen Verunreinigungen nicht zu befürchten. Auch kann Flüssigkeit bzw. Feuchtigkeit, welche im unteren durchströmten Teil des Gehäuses vorhanden ist, nicht in das Betätigungsteil oder eine an diese angeschlossene Betätigungseinrichtung, beispielsweise in Form eines Elektromagneten, eindringen.

Die Kompensationseinrichtungen sind vorzugsweise durch unterhalb der Membran mündende Öffnungen gebildet, welche unter Druckeinwirkung eine Verformung der Membran im Bereich der Öffnung bewirken und diese direkt gegen das Ventilglied drücken. Auf diese Weise gelingt es, mittels einfacher Öffnungen die Funktion zu realisieren, jedoch relativ komplizierte Übertragungseinrichtungen wie Stößel, Kolben oder dergl. zu vermeiden. Allerdings können auch bei der erfindungsgemäßen Lösung Übertragungsglieder oder Stößel erfindungsgemäß zur Anwendung gelangen, wenn dies aus einem bestimmten Grund erwünscht sein sollte. Es ist auch nicht unbedingt erforderlich, daß die Membran solche Stößel oder Übertragungsglieder überdeckt, wenn diese mit eigenen Dichtungen versehen sind. Eine die Kompensationseinrichtungen und die Ventilöffnungen überdeckende Membran ist jedoch die bevorzugte Lösung.

Bei Ausbildung der Kompensationseinrichtungen durch unterhalb der Membran vorgesehenen Öffnungen sollen diese Öffnungsquerschnitte aufweisen, welche die für die Verformung der Membran erforderlichen Kräfte berücksichtigen.

Nach einer besonders bevorzugten Ausführungsform sind die Ventilöffnungen sowie die erforderlichen Öffnungen für die Kompensationseinrichtungen in einer im unteren Teil des Gehäuses einsetzbaren Ventilplatte ausgebildet. Die entsprechende Ventilplatte kann von beiden Seiten bearbeitet werden und auch als Spritzgußteil in einem technischen Kunststoff realisiert werden. Im letzteren Fall ist eine maschinelle Bearbeitung der Ventilplatte dann nicht mehr notwendig.

Die Strömungsverbindungen von der Einlaßseite zu der ersten Kompensationseinrichtung auf der Auslaßseite und von der Auslaßseite zu der zweiten Kompensationseinrichtung auf der Einlaßseite können in der Unterseite der Ventilplatte ausgebildet werden. Dabei können sie die Form von nach unten offenen Kanälen aufweisen, wobei die allseitig geschlossene Form der Kanäle durch die Oberseite des unteren Gehäuseteils gebildet werden kann.

Eine andere Möglichkeit diese Strömungsverbindungen herzustellen besteht aber darin, sie in einer unterhalb der Membran im unteren Teil des Gehäuses einsetzbaren Platte oder Scheibe auszubilden, welche vorzugsweise zwischen der Ventilplatte und der Oberseite des unteren Gehäuseteils eingesetzt wird. Da die Scheibe aus weicherem Material als die Ventilplatte hergestellt werden kann, dient sie einigermaßen als Dichtung zwischen der Ventilplatte und dem unteren Teil des Gehäuses, so daß Leckagen über die genannten Strömungsverbindungen zu den Kompensationseinrichtungen nicht zu befürchten sind.

Das Ventilglied ist vorzugsweise selbst in etwa scheibenförmig ausgebildet und weist nach unten vorstehende Zapfen auf, welche oberhalb der Ventilöffnungen angeordnet sind. Beim Schließen der jeweiligen Öffnungen drückt der jeweilige Zapfen die Membran an den um die Ventilöffnung herum gebildeten Ventilsitz.

Das Ventilglied kann auch weitere, nach unten ragende Zapfen aufweisen, welche oberhalb der Kompensationsöffnungen zu liegen kommen. Die Kompensationskippmomente werden durch die an den Kompensationsöffnungen anliegenden Drücke über die Membran und die entsprechenden Zapfen auf das Ventilglied übertragen.

Besonders günstig ist eine Anordnung, bei der das obere Teil des Gehäuses eine etwa kreisförmige Aufnahme für das scheibenartige Ventilglied aufweist. Diese kreisförmige Aufnahme soll unten von einem Brückenteil bzw. von einer Querwand überquert werden, wobei in der Querwand Öffnungen für die Zapfen vorgesehen werden müssen, um die Zusammenarbeit des Ventilglieds mit der Membran bzw. mit den Kompensationseinrichtungen zu ermöglichen. Die Querwand dient dann auch dazu, die Bewegungsmöglichkeit der Membran zu begrenzen und hält diese an der Ventilplatte. Wenn das Ventilglied eine mittlere Öffnung aufweist, so kann von der Querwand ausgehend eine nach oben ragende Stütze vorgesehen werden, welche die Kippachse im mittleren Bereich abstützt.

Wird beispielsweise die Kippachse durch einen Stift gebildet, so soll dieser sich über einen Durchmesser des scheibenförmigen Ventilsglieds erstrecken und an seinen Enden und an seinem mittleren Teil in Aufnahmen an entgegengesetzten Seiten des Gehäuseoberteils bzw. in der Stütze abgestützt werden. Die Aufnahmen können durch nach oben offene Kerben gebildet werden, wobei der die Kippachse bildende Stift durch eine Platte einer am oberen Gehäuseteil befestigbaren Betätigungseinrichtung in den Kerben gehalten wird. In ähnlicher Weise kann das in Draufsicht vorzugsweise kreisförmige Ventilglied auf beiden Seiten der Stütze Aufnahmen für den die Kippachse bildenden Stift aufweisen.

Die Betätigungseinrichtung kann eine elektromagnetische Betätigungseinrichtung sein, insbesondere eine solche nach der deutschen Patentanmeldung DE-A-42 21 112, wobei diese Betätigungseinrichtung einen Stößel gegen den einen Arm des Ventilglieds drückt. Zur Rückstellung des Ventilglieds wird vorzugsweise eine Feder vorgesehen, welche auf den anderen Arm des Ventilglieds wirkt. Der Stößel des Elektromagneten kann mit Vorteilen durch eine Kugel gebildet werden. Hierdurch können preisgünstig qualitativ hochwertige Lagerkugeln zum Einsatz kommen.

Der Strömungskanal des Ventils führt zweckmäßigerweise vom Einlaß durch die erste Ventilöffnung, durch einen zwischen der ersten Ventilöffnung und der zweiten Ventilöffnung gebildeten Verbindungsraum, dann durch die zweite Ventilöffnung zu der Auslaßseite. Besonders günstig ist es, wenn eine weitere Verbindung zum Verbindungsraum vorgesehen wird. Hierdurch läßt sich die Funktion eines 3/2-Wegventils ohne weiteres erreichen.

Das erfindungsgemäße Ventil kann auch als Vorsteuerventil für ein Membranventil dienen, insbesondere für ein Membranventil nach der europäischen Patentanmeldung mit der Veröffentlichungsnummer 0 341 340.

Eine besonders bevorzugte Kombination des erfindungsgemäßen Ventils mit einer Membranventil geht aus dem Anspruch 12 hervor.

Die Erfindung wird nachfolgend näher erläutert anhand von Ausführungsbeispielen unter Bezugnahme auf die Zeichnung in welcher zeigen:
- Fig. 1: einen schematischen Längsquerschnitt durch ein erfindungsgemäßes Ventil in der geschlossenen Stellung,
- Fig. 2: einen Längsquerschnitt durch das Ventil der Fig. 1 jedoch in der geöffneten Stellung,
- Fig. 3A bis H: schematische Skizzen zur Erläuterung der Funktionsweise des erfindungsgemäßen Ventils nach den Fig. 1 und 2,
- Fig. 4: eine explodierte perspektivische Darstellung der Bestandteile des Ventils der Fig. 1 und 2 zur genaueren Erläuterung der Ausbildung dieses Ventils und
- Fig. 5: einen schematischen Längsquerschnitt durch ein erfindungsgemäßes Ventil das hier als Vorsteuerventil für ein Membranventil nach dem europäischen Patent 0 341 340 verwendet wird.

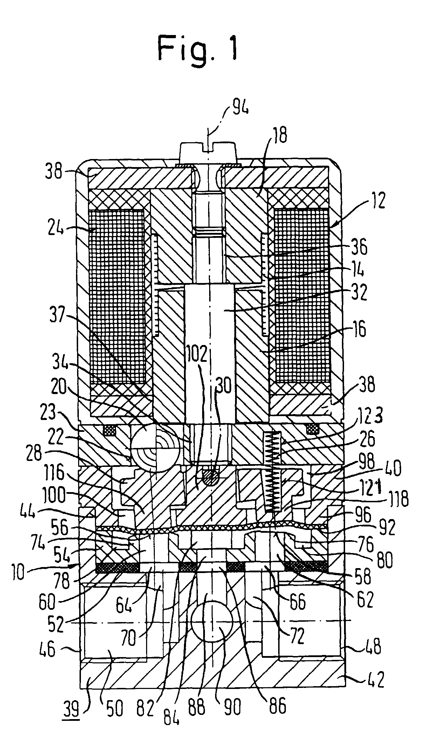

Die Fig. 1 zeigt ein Ventil 10 der erfindungsgemäßen Art, das von einem Elektromagneten 12 betätigt wird. Der Elektromagnet 12 ist vorzugsweise so ausgebildet wie in der deutschen Patentanmeldung DE-A-42 21 112 beschrieben. Auch andere Elektromagneten und andere Betätigungseinrichtungen können verwendet werden. Wesentlich bei dem Elektromagneten 12 ist daß im stromlosen Zustand die Feder 14 den Magnetanker 16 nach unten weg vom feststehenden Ankergegenstück 18 drückt, so daß der Magnetanker 16 einen Stößel in Form einer Kugel 20, welche in einer Bohrung 22 einer unteren Platte oder Halterung 23 des Elektromagneten geführt ist, nach unten drückt in die in der Fig. 1 gezeigten Stellung. Wird der Elektromagnet erregt durch einen die Spule 24 durchfließenden Strom, so wird der Magnetanker 16 entgegen der Kraft der Feder 14 an das feststehende Ankergegenstück 18 gezogen, so daß die Kugel nicht mehr belastet ist. Wie nachfolgend später näher erläutert wird, kann eine Rückstellfeder 26 ein als Kipphebel ausgebildetes Ventilglied 28 um die Kippachse 30 in eine andere Schaltstellung kippen, wodurch die Kugel 20 nach oben gedrückt wird.

Von Bedeutung bei dem Elektromagneten 12 ist insbesondere die mittig angeordnete Führung 32, welche an dem unteren Ende mittels eines Gewindes 34 in der Halterung 23 eingeschraubt ist und am oberen Ende mittels eines weiteren Gewindes 36 in das Ankergegenstück 18 eingeschraubt ist. Durch diese mittig angeordnete Führung gelingt es mit einem möglichst kleinem Luftspalt 37 zwischen dem beweglichen Magnetanker und dem Eisenrückschluß 38 zu arbeiten, wodurch der Wirkungsgrad des Elektromagneten besonders günstig ist, so daß der Elektromagnet für eine bestimmte Betätigungskraft sehr klein gebaut werden kann.

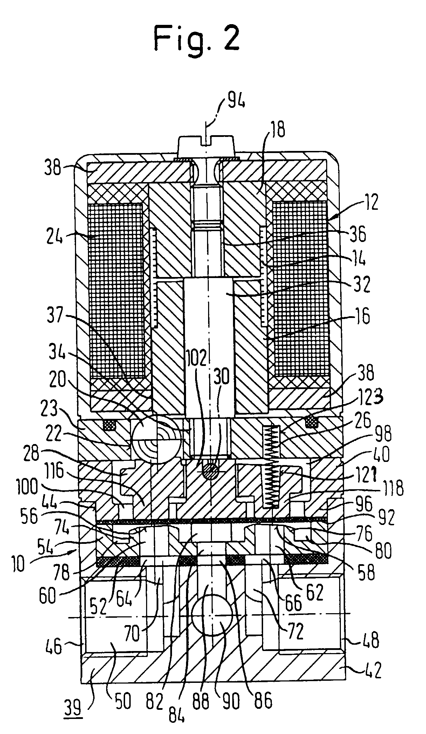

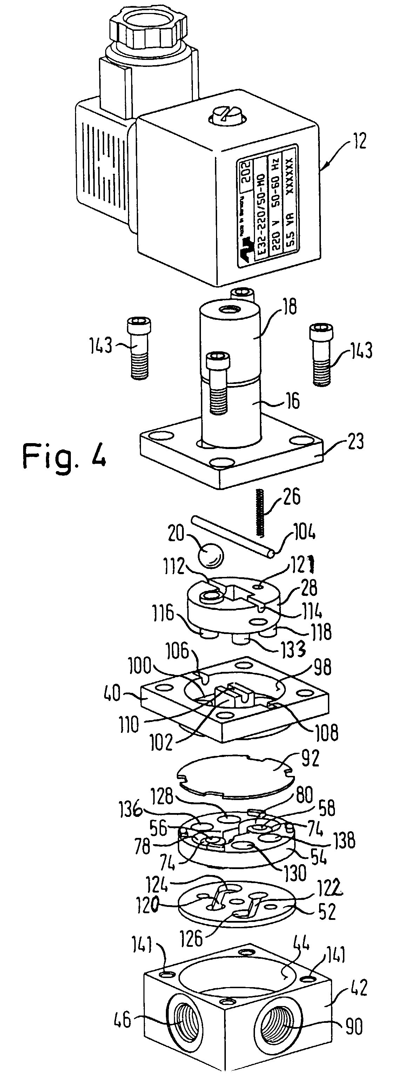

Das eigentliche Fluidventil 10 nach der Fig. 1 und 2 weist ein Gehäuse 39 mit oberen und unteren Teilen 40 und 42 auf. Das untere Gehäuseteil 42 ist, wie auch aus der Fig. 4 ersichtlich ist, quadratisch in Draufsicht und hat eine zylinderförmige Aufnahmeöffnung 44 in der Oberseite.

Im Bodenbereich des unteren Gehäuseteils 42 befindet sich ein Einlaß 46 und ein Auslaß 48, welche als Gewindebohrungen ausgebildet sind und einander gegenüberliegen. Der Einlaß kommuniziert mit dem Auslaß 48 über einen Strömungskanal 50, der teilweise im unteren Gehäuseteil 42 und teilweise in zwei weiteren Teilen, die in der Aufnahme 44 eingesetzt werden, ausgebildet ist. Es handelt sich bei diesen zwei weiteren Teilen einerseits um eine Strömungskanäle aufweisende Scheibe 52 und andererseits um eine ebenfalls in etwa scheibenförmige Ventilplatte 54. Diese Ventilplatte 54 weist zwei Ventilöffnungen 56 und 58 auf, welche über senkrecht erstreckende Bohrungen 60 bzw. 62 mit entsprechenden Öffnungen 64 und 66 der Scheibe 52 und senkrechte Bohrungen 70 und 72 des unteren Gehäuseteils 42 ausgerichtet sind, wobei die Bohrungen 70 und 72 die den Einlaß 46 und den Auslaß 48 bildende Gewindebohrungen überschneiden.

Die Ventilöffnungen 56 und 58 der Ventilplatte 54 sind an der oberen Kante von, die Gestalt von kurzen Rohren aufweisenden, Teilen 74 und 76 der Ventilplatte 54 gebildet, wobei diese rohrförmigen Teile 74 und 76 in jeweiligen, in etwa zylinderförmigen Öffnungen 78 und 80 der Ventilplatte 54 angeordnet sind. Diese zylinderförmigen Öffnungen 78 und 80 sind miteinander über einen Verbindungskanal 82 verbunden. Dieser Verbindungskanal 82, welcher sowohl in den Fig. 1 und 2 als auch in der Fig. 4 zu sehen ist, ist weiterhin über eine senkrechte Bohrung 84 der Ventilplatte 54, eine mittig angeordnete Bohrung 86 der Scheibe 52 und eine senkrecht angeordnete Bohrung 88 des unteren Gehäuseteils 42 mit einer weiteren Auslaßbohrung 90 verbunden, welche als zusätzlicher Einlaß oder Auslaß benutzt werden kann und entsprechend dem Einlaß 46 und dem Auslaß 48 als Gewindebohrung ausgebildet und insbesondere in Fig. 4 ersichtlich ist. Die Bohrung 90 kann aber auch mit einem Stöpsel geschlossen werden und muß nicht unbedingt vorgesehen werden.

Aus den Fig. 1 und 2 merkt man, daß die Ventilöffnungen bzw. die oberen Kanten der rohrförmigen Teile 74, 76 etwas abgeschrägt sind, um die Zusammenarbeit mit einer über den Öffnungen liegenden Membran 92 bzw. mit dem darüber liegenden Ventilglied 28 zu erleichtern.

Die Membran 92, welche im wesentlichen scheibenförmig ist (wie aus Fig. 4 ersichtlich), wird zwischen der unteren Kante des oberen Gehäuseteils 40 und der oberen Kante der Ventilplatte 54 festgehalten, und zwar in jeweiligen zylinderförmigen Bereichen, die an der Wandung der zylindrischen Aufnahme 44 angeordnet sind. Die zylinderförmige Aufnahme 44 des unteren Gehäuseteils 42 dient somit nicht nur dazu die Scheibe 52 und die Ventilplatte 54 zu zentrieren, damit diese koaxial zur mittleren Längsachse 94 des Ventils liegen, sondern zentriert auch das obere Gehäuseteil 40, das ebenfalls konzentrisch zu der mittleren Längsachse 94 des Ventils angeordnet ist. Diese letzte Zentrierung erfolgt über die Ringschulter 96 des oberen Gehäuseteils 40, welche in die zylindrischen Aufnahme 44 paßt.

Auch das obere Gehäuseteil 40 hat eine in etwa zylinderförmige Aufnahme bzw. einem in etwa zylinderförmigen Raum 98, welche an ihre bzw. seinem unteren Ende durch eine Öffnungen aufweisenden Querwand 100 begrenzt ist. Im mittleren Bereich der zylinderförmigen Aufnahme 98 befindet sich eine Stütze 102, welche von der Querwand 100 getragen wird. Das vorhin erwähnte Ventilglied 28, das als zweiarmiger Kipphebel ausgebildet ist, paßt innerhalb der Aufnahme 98, wie am besten aus der Fig. 1 bzw. 2 zu ersehen ist. Ein Stift 104 (Fig. 4) dient als Kippachse 30 für das Ventilglied 28. Wie aus Fig. 4 am besten ersichtlich, passen die Enden des Stiftes 104 in jeweiligen Aufnahmen 106 und 108 des oberen Gehäuseteils 40, wobei die Aufnahmen 106 und 108 nach oben offen sind und einander diametral gegenüberliegen. Die Stütze 102 weist ebenfalls eine nach oben offene Aufnahme 110 auf, welche den mittleren Bereich des die Kippachse bildenden Stiftes 104 abstützt. Auch das Ventilglied 28, das in Draufsicht kreisförmig ausgebildet ist, weist zwei nach oben offene, einander diametral gegenüberliegende Aufnahmen 112 und 114 auf, welche ebenfalls die Kippachse 104 aufnehmen und zwar in den Bereichen zwischen der Aufnahme 106 und der Aufnahme 100 bzw. der Aufnahme 100 und der Aufnahme 108.

Wie aus Fig. 1 und 2 ersichtlich, weist das Ventilglied 28 zwei Zylinderzapfen 116 und 118 auf, welche den Ventilöffnungen 56 und 58 unter Zwischenschaltung der Membran 92 gegenüberstehen.

Oberhalb des zapfenförmigen Ventilvorsprungs 116 auf der dem Vorsprung abgewandten Seite des Ventilglieds 28 befindet sich die als Ventilstößel wirkende Kugel 20. Auf der anderen Seite der Kippachse erstreckt sich die Ventilfeder 26 teilweise innerhalb einer im zapfenartigen Vorsprung 118 ausgebildeten Bohrung 121 und teilweise innerhalb einer in der Halterung bzw. Platte 23 ausgebildeten mit der Bohrung 121 fluchtenden Bohrung 123.

Die Grundfunktion des Ventils läßt sich nunmehr anhand der Fig. 1 und 2 kurz erklären. In der in Fig. 1 gezeigten Stellung ist der Elektromagnet 12 stromlos, d.h. nicht erregt und die Feder 14 drückt den Magnetanker 16 nach unten, so daß dieser die Kugel 20 ebenfalls nach unten drückt und die Kugel durch Anlage an das Ventilglied 28 dieses in der in Fig. 1 gezeigten geneigten Stellung hält. Der zapfenartige Ventilvorsprung 116 hält dann die Membran gegen die die Ventilöffnung 56 umgebende Ringkante, so daß die Ventilöffnung geschlossen ist. Hierdurch wird eine Strömung durch den Kanal 50 vom Einlaß 46 zum Auslaß 48 verhindert. Eine Durchströmung vom Einlaß 90 in den Auslaß 48 ist jedoch möglich, oder aber auch in umgekehrter Richtung, sofern der Einlaß/ Auslaß 90 vorgesehen und nicht geschlossen ist.

Wird der Elektromagnet 12, der in diesem Beispiel als Proportionalmagnet ausgebildet ist, erregt, jedoch nur mit etwa der Hälfte des vollen Erregungsstromes, so wird der bewegliche Magnetanker etwas nach oben gezogen, d.h. in Richtung des Ankergegenstückes 18 und die Kraft der Feder 26 reicht aus, um das Ventilglied 28 in die waagerechte Stellung zu bringen, welche aus der Fig. 2 ersichtlich ist. In dieser Stellung berührt die Membran 92 weder die ringförmige die Ventilöffnung 56 umgebende Kante, noch die ringförmige die Ventilöffnung 58 umgebende Kante, so daß eine Strömung vom Einlaß bis zum Auslaß möglich ist und zwar über die Bohrung 70, die Öffnung 64, und die Bohrung 60, durch die Ventilöffnung 56, durch den Kanal 82, durch die Ventilöffnung 58, und über die Bohrungen 62, die Öffnung 66, die Bohrung 72 in den Auslaß 48. Wird der Anschluß 90 vorgesehen und ebenfalls an einen Verbraucher angeschlossen, so wird ein Teil der Strömung ebenfalls an diesen an dem Auslaß 90 angeschlossenen Verbraucher geführt. Außerdem sind Strömungen in andere Richtungen möglich. Beispielsweise kann der Anschluß 90 zu einem Einlaß deklariert werden, der Einlaß 46 kann zum Auslaß gemacht werden und man kann über den Eingang 90 Strömungen durch den jetzt als Auslaß funktionierenden Einlaß 46 und den noch als Auslaß funktionierenden Auslaß 48 erreichen.

Wird der Elektromagnet voll erregt, so wird der bewegliche Anker 16 voll angezogen, d.h. er kommt in Berührung mit dem Ankergegenstück 18. so daß die Kugel 20 vollkommen entlastet ist und die Kraft der Feder 26 reicht dann aus, um das Ventilglied 28 in Uhrzeigerrichtung zu kippen. Hierdurch wird durch den zapfenartigen Ventilvorsprung 118 die Membran 92 gegen die ringförmige, die Ventilöffnung 58 umgebende Kante gedrückt, so daß eine Durchströmung vom Einlaß 46 zum Auslaß 48 nunmehr nicht möglich ist. Würde aber der Anschluß 90 als Auslaß benützt, so könnte eine Durchströmung vom Einlaß 46 in den Auslaß 90 erfolgen.

Wenn man das Ventil im in Fig. 1 gezeigten Zustand betrachtet, so wird klar, daß das Ventilglied 28 drehmomentmäßig nicht ausgeglichen erscheint. Der Einlaßdruck wirkt über die Fläche der ringförmigen Öffnung 56 auf das Ventilglied 28 und verursacht ein Kippmoment in Uhrzeigerrichtung. Der wohl niedrigere Druck auf der Auslaßseite 48 arbeitet schließlich nur auf die Fläche der zapfenartigen Vorsprung 118 auf das Ventilglied 28 und verursacht ein Kippmoment entgegen dem Uhrzeigersinn. Da die Hebelarme gleich groß sind, und der Druck auf der Eingangsseite üblicherweise weitaus höher liegt als auf der Ausgangsseite, wäre eine relativ große Kraft der Feder 14 erforderlich, um das Ventilglied 28 in der gezeigten Stellung zu halten, zudem das von der Feder 26 herrührende Kippmoment auch noch ausgeglichen werden muß.

Das Ventil ist aber so ausgelegt, daß Kompensationsmomente auf das Ventilglied 28 einwirken, welche sicherstellen, daß die auf dem Ventilglied 28 einwirkenden Kippmomente aufgrund der im Betrieb herrschenden Drücke in allen Arbeitslagen zumindest im wesentlichen ausgeglichen sind. Dies führt dazu, daß der Elektromagnet sehr klein ausgebildet werden kann, da er nunmehr nur noch die Kraft aufbringen muß, um das Ventilglied entgegen der herrschenden Reibungs- und (kleinen) Federkräften zu bewegen.

Wie dieser Ausgleich der von den Betriebsdrücken herrührenden Kippmomente erfolgt, wird nunmehr näher erläutert.

Wie aus der Fig. 4 ersichtlich, weist die Scheibe 52 Verbindungskanäle 120, 122 an weiteren Öffnungen 124 und 126 auf, die in den Fig. 1 und 2 nicht ersichtlich sind. Diese Öffnungen 124 und 126 flüchten mit senkrechten Bohrungen 128 und 130 der Ventilplatte 54, so daß der auf der Einlaßseite 46 herrschende Druck über den Kanal 120, die Öffnung 124 und die Bohrung 128 auf der Auslaßseite auf der Membran einwirkt, während der auf der Auslaßseite des Ventils herrschender Druck über den Kanal 122 die Öffnung 126 und die Bohrung 130 auf der Einlaßseite auf der Membran einwirkt. Oberhalb der Membran am Ventilglied 28 befinden sich den Bohrungen 130 und 128 gegenüberstehend weitere Vorsprünge 133 (nur einer dieser Vorsprünge ist in Fig. 4 ersichtlich), welche die auf der Membran 92 einwirkenden Kräfte auf das Ventilglied 28 übertragen. Mit anderen Worten, erfolgen aufgrund der in den Bohrungen 128 und 130 herrschenden Drücke Ausgleichskippmomente auf das Ventilglied 28, so daß dieses bei entsprechender Auslegung der Größe der Öffnungen 128, 130 kippmomentenmäßig vollkommen ausgeglichen werden kann. Die Bohrungen 128, 130 bilden daher zusammen mit den zugeordneten Vorsprüngen 133 Kompensationseinrichtungen.

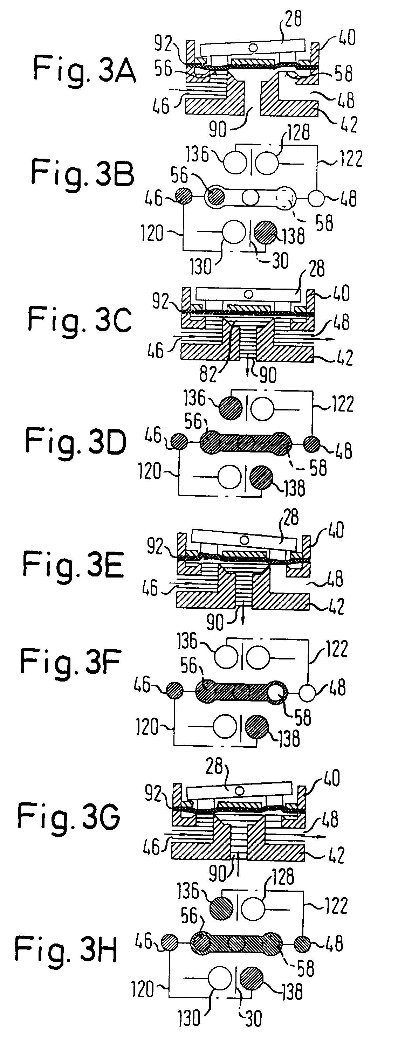

Zusätzlich zu den Bohrungen können zwei weitere Bohrungen 136 und 138 in der Ventilplatte 54 vorgesehen werden, die anstatt der Öffnungen 128 und 130 als Kompensationsöffnungen verwendet werden können. Dies ist beispielsweise dann möglich, wenn die Scheibe 52 gegenüber der Zeichnung der Fig. 4 um 90° gedreht in das Gehäuse 38 eingesetzt worden wäre. Dies würde dann zu einer Anordnung führen, so wie sie in der Fig. 3 skizzenhaft dargestellt ist.

Die Fig. 4 zeigt auch, wie in diesem Beispiel der Elektromagnet 12 über vier, die Ecken der Halterung 23 sowie die Ecken des Gehäuseteils 40 durchdringenden in Schraubbohrungen 141 des Gehäuseunterteils 42 einschraubbaren Imbusschrauben 143 an das Ventil 10 befestigt wird und diese gleichzeitig zusammenhält.

Die Funktionsweise des Ventils wird jetzt nachfolgend noch einmal erläutert, im Hinblick auf die Fig. 3A bis 3H.

Die Fig. 3A zeigt schematich das Ventil der Fig. 1 mit dem Ventilglied 28 in der in Fig. 1 gezeigten Stellung. Man merkt, daß die Ventilöffnung 56 geschlossen ist, dagegen die Ventilöffnung 58 geöffnet ist. Der Elektromagnet ist Stromlos, das von der Feder 14 herrührende Betätigungsmoment ist größer als das Rückstellmoment der Feder 26.

Da die Bohrung 138 mit der Eingangsseite des Ventils über den Kanal 120 kommuniziert, wird dort ein Kippmoment auf das Ventilglied 28 erzeugt, daß das vom eingangsseitigen Druck erzeugte Kippmoment ausgleicht. Man merkt, daß der Querschnitt der Öffnung 138 größer ist als der Querschnitt der Ventilöffnung 56, durch diese erhöhte Fläche wird dafür Rechnung getragen, daß die von der Bohrung 138 erzeugte Kraft auf einen kürzeren Momentarm wirkt, bezogen auf die Kippachse 30 als die von der Öffnung 56 erzeugte Kraft. Durch die unterschiedliche Gestaltungen der Größen der Öffnungen 56 und 138 kann auch u.a. dafür Rechnung getragen werden, daß ein Teil der von den jeweiligen Öffnungen erzeugten Kräften für die Verformung der Membran benötigt werden.

In entsprechender Weise wird der ausgangsseitig herrschende Druck über den Kanal 122 in die Bohrung 136 eingespeist, so daß auch hier ein vollkommener Momentausgleich herrscht, genauso wie für die Druckseite erwähnt wurde. Der Ausgangsdruck herrscht zwar auch im Kanal 82, er kann aber hier kein Kippmoment auf das Ventilglied 28 ausüben bzw. übt er gleich große Kippmomente aber in entgegengesetzten Richtungen auf das Ventilglied 28 aus, so daß diese Kippmomente vernachlässigt werden können, da sie einander aufheben.

Die Öffnungen 128 und 130 werden bei dieser Drehstellung der Scheibe 52 nicht benutzt. Sie könnten aber beim Vorsehen von weiteren Öffnungen in der Scheibe 52 und im Gehäuseteil 42 bzw. durch Vorsehen von weiteren Zapfen auf das Ventilglied 28 zu zusätzlichen Steueröffnungen ausgebildet werden, beispielsweise, um eine Fremdsteuerung von außen zu ermöglichen.

In den Zustand bzw. in der Schaltstellung nach den Fig. 3A und 3B ist das Ventil bis auf das Betätigungsmoment der Feder und das diesen entgegengesetzte Rückstellmoment der Feder 26 vollkommen ausgeglichen (angenommen, daß man die Gewichtskraft des beweglichen Ankers vernachlässigt).

Die Fig. 3C zeigt dann die Umstände, wenn das Ventilglied 28 die Lage nach der Fig. 2 einnimmt. Wie aus der Fig. 3D ersichtlich ist, werden die von der Eingangsseite und von der Ausgangsseite herrührenden Drücke erzeugten Momente genauso ausgeglichen, wie in der Lage des Ventilglieds nach Fig. 3A. Auch hier spielt der Druck im Kanal 82 keine Rolle, wie ebenfalls oben begründet wurde. Auch in diesem Zustand ist das Ventil, wie oben erläutert, ausgeglichen, hier sogar auch in bezug auf das Betätigungsmoment und das Rückstellmoment.

Die Fig. 3E zeigt dann die Stellung des Ventilglieds 28 bei der die Ventilöffnung 58 geschlossen, dagegen die Ventilöffnung 56 geöffnet ist. Das heißt, der Elektromagnet ist vollständig erregt bzw. angezogen und die Feder 26 drückt die rechte Seite des Ventilglieds nach unten. Man merkt, daß eine Strömung vom Einlaß 46 zum Auslaß 90 möglich ist, die Strömungsveränderung vom Einlaß 46 zum Auslaß 48 ist jedoch unterbrochen. Nun herrschen die Verhältnisse, die in Fig. 3F gezeigt sind, d.h. auch hier sind die aufgrund der Betriebsdrücke herrschenden Kräfte auf das Ventilglied 28 einwirkenden Kippmomente vollkommen ausgeglichen.

Schließlich zeigt die Fig. 3G die gleiche Lage des Ventils wie in der Fig. 3A jedoch jetzt unter der Annahme, daß der Einlaß 90 mit Druckfluid beaufschlagt wird, so daß dieser vom Einlaß 90 bis zum Auslaß 48 strömt, bzw. daß der beim Anschluß 90 aufgebaute Druck durch eine Strömung zum Auslaß 48 sich abbaut.

Auch die in dem Zustand der Fig. 3G herrschenden Drücke führen zu einem vollständigen Ausgleich der auf das Ventilglied 28 einwirkenden Kippmomente, wie von der Fig. 3H gezeigt wird. Auch bei dieser Betriebsweise ist daher das Ventil ausgeglichen (abgesehen vom Betätigungsmoment und vom Rückstellmoment).

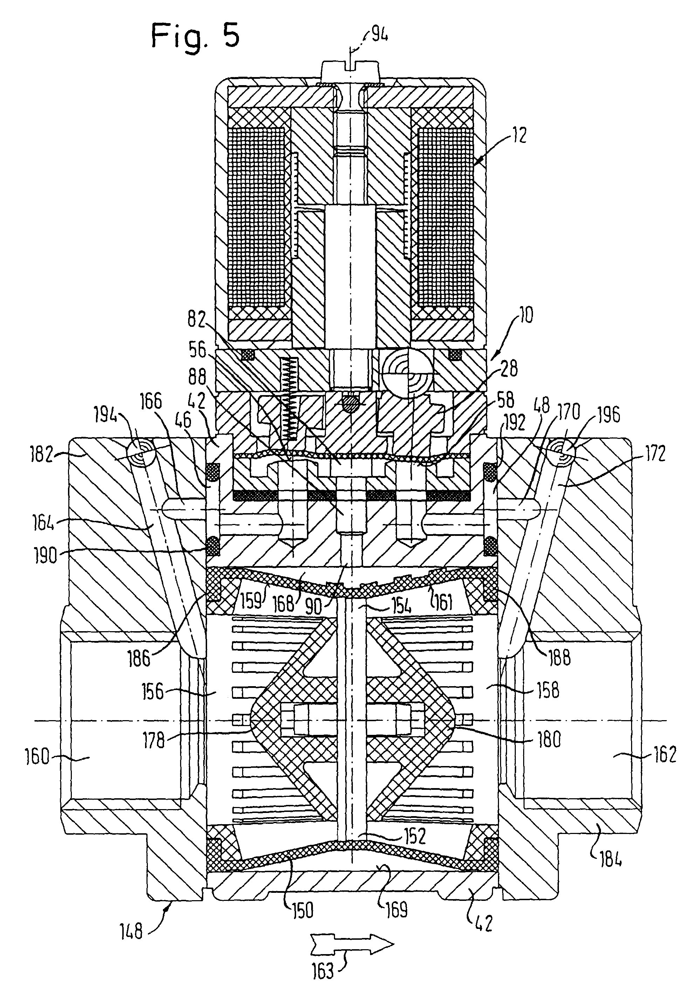

Die Fig. 5 zeigt schließlich das Ventil 148 der bisherigen Figuren als Vorsteuerventil, montiert auf ein Membranventil nach der europäischen Patentanmeldung, Veröffentlichungsnr. 0 341 340. Lediglich das Gehäuseunterteil 42 ist etwas anders gestaltet als in den bisherigen Figuren gezeigt.

Das Membranventil nach der europäischen Patentanmeldung, Veröffentlichungsnr. 0 341 340 wie die Fig. 5 hier abgebildet, weist eine in etwa schlauchförmige Membran 150 auf, das an einem ringförmigen Ventilsitz 152 der gezeigten Stellung des Ventils anliegt. Die ringförmige Sitzfläche 152 stellt den äußeren Umfang einer Trennwand 154 dar, welche von zwei geschlitzten zylinderförmigen Teilen 156 und 158 getragen wird. Das Membranventil hat zwei Anschlüsse 160, 162, die normalerweise als Eingang (160) und Ausgang (162) funktionieren. Das heißt, die Durchströmung erfolgt in Richtung des Pfeils 164.

In der gezeigten Stellung nach Fig. 5 ist das Membranventil geschlossen, da die ringförmige Membran 150 an den Ringsitz 152 anliegt. Der Grund hierfür liegt darin, daß der im Eingang 160 herrschende Druck über die Bohrung 164 die Bohrung 166 sowie die Bohrungen des erfindungsgemäßen Ventils 10 in den Kanal 82, und dann über die mittlere Bohrung 88 sowie die Anschlußöffnung 90 in den Ringraum 168 gelangt, der um die schlauchförmige Membran 150 herum zwischen dieser und dem unteren Teil des Gehäuses 42 gebildet ist. In diesem Beispiel ist das untere Teil 42 des Gehäuses unterhalb der Einlaß- und Auslaßöffnungen 46, 48 nämlich mit einer zylinderförmigen Bohrung 169 versehen, der die schlauchförmige Membran sowie die Körper 156 und 158 und die Trennwand 154 aufnimmt. Der eingangsseitige Druck hält somit die Membran 150 gegen die Trennwand 154, das Membranventil ist somit geschlossen.

Das Ventil 10 wird nunmehr angesteuert, so daß es eine Lage einnimmt, wie in Fig. 2 gezeigt, wobei beide Ventilöffnungen 56 und 58 geöffnet sind (in Fig. 5 nicht gezeigt), so wird der in der Ringkammer 168 herrschende Druck abgebaut, da das Druckfluid nunmehr über die Anschlußöffnung 90, die Bohrung 88, den Kanal 82, die Öffnung 56, den Auslaß 48, die weitere Bohrung 170 sowie die Bohrung 172 zum Auslaß 162 des Membranventils abfließen kann. Der eingangsseitig herrschende Druck im Eingang 160 hebt nun die Membran 150 vom Ringsitz 152 und das am Eingang 160 anliegende Druckfluid strömt nun durch die Schlitze des rohrförmigen Teils 156 durch die jetzt zwischen der Innenseite der schlauchförmigen Membran und die Teile 156, 158 gebildete Kammer (in Fig. 5 nicht gezeigt) über den Ringsitz 152 und radial nach innen durch die Schlitze des rohrförmigen Teils 158 zum Auslaß 162. Die Teile 178 und 180 stellen Strömungskegel dar, welche die Strömungsverhältnisse im Membranventil verbessern. Wie in der europäischen Patentanmeldung nachzulesen ist, ist die Membran 150 vorzugsweise etwas länger ausgebildet als die axiale Länge der ihn abstützenden Flächen 159, 161 der Teile 156 und 158 mit Trennwand um hierdurch ein sanftes geräuschloses Schließverhalten zu erreichen.

Der Vollständigkeit halber wird darauf hingewiesen, daß das Membranventil 148 zusätzlich zu den in der Zylinderbohrung 169 des Unterteils 42 des Vorsteuerventils 10 enthaltenen Teile 150, 154, 156, 158 aus einem Eingangsteil 182 und einem Ausgangsteil 184 besteht, die mittels durchgehender Schrauben (in Fig. 5 nicht gezeigt) an entgegengesetzten Stirnseiten des Gehäuseteils 42 angepreßt sind. Die Bohrungen 164, 166 und 170, 172 sind im Einlaßteil 182 bzw. im Auslaßteil 184 vorgesehen. Die Abdichtung erfolgt über die Ringflansche 186, 188 an den Axialenden der schlauchförmigen Membran 154. Zusätzliche Abdichtungen zwischen dem Eingangsteil 182 und dem Einlaß 46 bzw. zwischen dem Ausgangsteil 184 und dem Auslaß 48 werden durch in entsprechenden Ringaufnahmen vorgesehenen O-Ringdichtungen 190, 192 geschaffen. Im übrigen ist aus der Fig. 5 ersichtlich, daß der Elektromagnet 12 und das Ventilglied 28 um 180° gedreht gegenüber die Fig. 1 und 2 Ausführung eingebaut ist, was aber für die Funktion keine Bedeutung hat. Abgesehen davon, daß die geschlossene Lage nach der Fig. 5 im stromlosen Zustand des Elektromagneten erfolgt, anstatt im erregten Zustand desselben. Die Bezugszeichen 194 und 196 deuten auf zwei Kugeln, die zur Verschließung der offenen Enden der Bohrungen 164 und 172 dienen.

Mit der in Fig. 5 gezeigten Konstruktion können sehr kleine Betätigungskräfte vom Elektromagneten 12 ausgenützt werden, um das Vorsteuerventil 10 zu betätigen, dieses wiederum kann ein für viel größere Strömungen ausgelegtes Membranventil ansteuern. Besonders günstig ist auch, daß mit dieser Konstruktion keine ausgeprägten Drosselstellen in den Bohrungen 164, 166, 170, 172 erforderlich sind, und auch nicht im Vorsteuerventil 10 vorliegen, so daß eine Funktionsstörung aufgrund von Verschmutzung bzw. Verstopfung des Strömungskanals an Drosselstellen ausgeschlossen ist, da solche Drosselstellen fehlen.

Bei allen Ausführungsformen ist ein schnelles Umschalten des Ventils möglich, nicht zuletzt darum, weil das Ventilglied klein ausgebildet ist und daher eine kleine Trägheit aufweist.

## Patentansprüche

1. Ventil, bestehend aus einem Ventilgehäuse (39), aus einem im Gehäuse um eine Kippachse (30) kippbar angeordneten Ventilglied (28), das zum Schließen bzw. Freigeben von auf entgegengesetzten Seiten der Kippachse (30) in einem von einem Einlaß (46) zu einem Auslaß (48) führenden Strömungskanal (50) angeordneten Ventilöffnungen (56, 58) dient, wobei die im Betrieb an den Ventilöffnungen herrschenden Drücke Kippmomente auf das Ventilglied ausüben, und aus auf beiden Seiten der Kippachse angeordneten Kompensationskippmomente auf das Ventilglied (28) bewirkenden Einrichtungen (120, 138, 133; 122, 136, 133), wobei die genannten Kippmomente und Kompensationskippmomente in allen Stellungen des Ventilglieds einander zumindest im wesentlichen aufheben, sowie aus einer das Ventilglied ansteuernde, dieses zu einer Kippbewegung veranlassende Betätigungseinrichtung (12),
dadurch **gekennzeichnet,**
daß sowohl die Ventilöffnungen (58) als auch die Kompensationseinrichtungen (120, 138, 133; 122, 136, 133) zumindest im wesentlichen in einer Ebene liegen.

2. Ventil nach Anspruch 1,
dadurch **gekennzeichnet,**
daß die Kompensationseinrichtungen aus einer ersten auf der Auslaßseite des Ventils angeordneten, mit dem Druck auf der Einlaßseite des Ventils beaufschlagten Einrichtung (138, 133) sowie aus einer zweiten auf der Einlaßseite des Ventils angeordneten, mit dem Druck auf der Auslaßseite des Ventils beaufschlagten Einrichtung (136, 133) bestehen.

3. Ventil nach Anspruch 1 oder 2,
dadurch **gekennzeichnet,**
daß es aus einem unteren Gehäuseteil (42), welches die Einlaßöffnung (46), die Auslaßöffnung (48), den Strömungskanal (50), die Ventilöffnungen (56, 58) und die Kompensationseinrichtungen (122, 138, 133; 120, 136, 123) enthält, und aus einer die Ventilöffnungen und die Kompensationseinrichtungen überdeckenden Membran (92) sowie aus einem die Membran gegen den unteren Gehäuseteil (42) haltenden, das Ventilglied (28) enthaltenden und die Kippachse (30) bestimmenden oberen Gehäuseteil (40) besteht, daß die Membran (92) vorzugsweise scheibenförmig ausgebildet ist, und/oder daß die Kompensationseinrichtungen vorzugsweise durch unterhalb der Membran (92) mündende Öffnungen (136, 138 bzw. 128, 130) gebildet sind, welche unter Druckeinwirkung eine Verformung der Membran im Bereich der Öffnungen bewirken und diese direkt gegen das Ventilglied (28) drücken.

4. Ventil nach Anspruch 3,
dadurch **gekennzeichnet,**
daß die die Kompensationseinrichtungen bildenden Öffnungen Öffnungsquerschnitte aufweisen, welche die für die Verformung der Membran erforderlichen Kräfte berücksichtigen.

5. Ventil nach einem der vorhergehenden Ansprüche,
dadurch **gekennzeichnet,**
daß die Kompensationseinrichtungen durch kolbenartige Stößel gebildet sind.

6. Ventil nach Anspruch 3,
dadurch **gekennzeichnet,**
daß die Ventilöffnungen (56, 58) sowie die erforderlichen Öffnungen (136, 138; 128, 130) für die Kompensationseinrichtungen in einer im unteren Teil des Gehäuses einsetzbaren Ventilplatte (54) ausgebildet sind, und daß die Strömungsverbindungen (120, 122) von der Einlaßseite zu der ersten Kompensationseinrichtung (138, 133) und von der Auslaßseite zu der zweiten Kompensationseinrichtung (136, 133) vorzugsweise durch entsprechende Kanäle in einer unterhalb der Membran in das untere Teil (42) des Gehäuses einsetzbaren Scheibe (52) ausgebildet sind, oder, als mögliche Alternative die Strömungsverbindungen von der Einlaßseite zu der ersten Kompensationseinrichtung und von der Auslaßseite zu der zweiten Kompensationseinrichtung unterhalb der Ventilplatte in dieser ausgebildet sind.

7. Ventil nach einem der Ansprüche 3 bis 6,
dadurch **gekennzeichnet,**
daß das Ventilglied (28) in etwa scheibenförmig ausgebildet ist und nach unten vorstehende Zapfen (116, 118) aufweist, welche oberhalb der Ventilöffnungen (56, 58) angeordnet sind und beim Schließen der jeweiligen Ventilöffnungen die Membran (92) gegen den um die jeweilige Ventilöffnung herum gebildeten Ventilsitz drücken, und vorzugsweise daß das Ventilglied (28) weitere, nach unten ragende Zapfen (133) aufweist, welche oberhalb der Kompensationsöffnungen (136, 138 bzw. 128, 130) angeordnet sind.

8. Ventil nach Anspruch 7,
dadurch **gekennzeichnet,**
daß das obere Teil (40) des Gehäuses eine etwa kreisförmige Aufnahme (98) für das scheibenartige Ventilglied (28) aufweist, wobei die Aufnahme unten durch eine Querwand (100) abgeschlossen ist, welche Öffnungen für die Zapfen (116, 118 bzw. 133) aufweist, um die Zusammenarbeit des Ventilglieds mit der Membran (92) bzw. mit den Kompensationseinrichtungen zu ermöglichen, wobei die Querwand die Bewegungsmöglichkeit der Membran (92) begrenzt und diese gegen die Ventilplatte (54) hält, und vorzugsweise daß das Ventilglied eine mittlere Öffnung aufweist, durch welche eine von der Querwand nach oben ragende Stütze (102) hindurchragt, und daß die Kippachse (30) durch einen Stift (104) gebildet ist, der sich über einen Durchmesser des scheibenförmigen Ventilglieds (28) erstreckt und an seinen Enden bzw. an seinem mittleren Bereich in jeweiligen Aufnahmen (106, 108 bzw. 110) des Gehäuseoberteils abgestützt ist, wobei die Aufnahmen durch nach oben offene Kerben gebildet sind und der Stift 104 durch eine Platte (23) einer am oberen Gehäuseteil befestigbaren Betätigungseinrichtung in den Aufnahmen gehalten wird, wobei das Ventilglied vorzugsweise auf beiden Seiten der Stütze (102) Aufnahmen (112, 114) für den die Kippachse (30) bildenden Stift (104) aufweist.

9. Ventil nach einem der vorhergehenden Ansprüche,
dadurch **gekennzeichnet,**
daß die Betätigungseinrichtung eine elektromagnetische Betätigungseinrichtung (12) ist, wobei diese Einrichtung einen Stößel (20) gegen den einen Arm des Ventilglieds (28) drückt, wobei vorzugsweise auf dem anderen Arm des Ventilglieds (28) eine Rückstelleinrichtung, beispielsweise eine Rückstellfeder (26) einwirkt, und daß der Stößel vorzugsweise durch eine Kugel (20) gebildet wird.

10. Ventil nach einem der vorhergehenden Ansprüche,
dadurch **gekennzeichnet,**
daß der Strömungskanal (50) vom Einlaß (46) durch die erste Ventilöffnung (56), durch einen zwischen der ersten Ventilöffnung (56) und der zweiten Ventilöffnung (58) gebildeten Raum (82) und dann durch die zweite Ventilöffnung (58) zu dem Auslaß (48) führt, wobei ggf. eine weitere Anschlußverbindung (90) zum Raum (82) vorsehbar ist.

11. Ventil nach einem der vorhergehenden Ansprüche,
dadurch **gekennzeichnet,**
daß es als Vorsteuerventil einem Membranventil dient, insbesondere für ein Membranventil nach der veröffentlichten europäischen Patentanmeldung mit der Veröffentlichungsnummer 0 341 340.

12. Ventil nach Anspruch 11,
dadurch **gekennzeichnet,**
daß das Membranventil eine schlauchartige, innerhalb einer Zylinderbohrung (169) des unteren Gehäuseteils (42) vorgesehenen, durch innere Absstützkörper (156 bzw. 158) abgestützte und mit einem von einer von diesen Abstützkörpern getragenen Quer- bzw. Trennwand (154) gebildeten Ventilsitz (152) zusammenarbeitende Membran (150) enthält, wobei zwischen dieser schlauchförmigen Membran (150) und der diese aufnehmende Zylinderbohrung (169) des unteren Gehäuseteils (42) ein Ringraum (168) vorgesehen ist, der je nach Stellung des Vorsteuerventils entweder mit dem einlaßseitig (160) herrschenden Druck beaufschlagbar ist und hierdurch an den Ventilsitz der Trennwand anliegt oder zur Auslaßseite (162) entlastet wird, wodurch die schlauchförmige Membran aufgrund des eingangsseitig (160) herrschenden Druckes sich von der Trennwand (154) bzw. von dem Ventilsitz (152) abhebt und eine Durchströmung des Membranventils vom Eingang (160) durch im Abstützkörper (156) vorgesehenen Öffnungen über die Trennwand (154) durch im Abstützkörper (158) vorgesehenen Öffnungen zum Auslaß (162) hindurch ermöglicht.

## Claims

1. Valve, comprising a valve housing (39), a valve member (28) tiltably arranged in the housing about a tilt axis (30) and serving to close or free valve openings (56, 58) arranged on opposite sides of the tilt axis (30) in a flow passage (50), leading from an inlet (46) to an outlet (48), wherein the pressures which prevail at the valve openings in operation exert tilting moments on the valve member, and means (120, 138, 133; 122, 136, 133) arranged on both sides of the tilt axis, which bring about compensation tilting moments on the valve member (28), wherein the said tilting moments and compensation tilting moments at least substantially cancel one another in all positions of the valve member, and also comprising an actuating device (12), which controls the valve member and causes the latter to execute a tilting movement,
characterised in that
both the valve openings (58) and also the compensation means (120, 138, 133; 122, 136, 133) lie at least substantially in one plane.

2. Valve in accordance with claim 1,
characterised in that
the compensation means comprise a first means (138, 133) arranged at the outlet side of the valve, which is acted on by the pressure at the inlet side of the valve, and also a second means (136, 133) arranged at the inlet side of the valve, which is acted on by the pressure at the outlet side of the valve.

3. Valve in accordance with claim 1 or claim 2,
characterised in that
it comprises a lower housing part (42) which contains the inlet opening (46), the outlet opening (48), the flow passage (50), the valve openings (56, 58) and the compensation means (122, 138, 133; 120, 136, 123) and a membrane (92) which covers the valve openings and the compensations means, and also comprises an upper housing part which holds the membrane against the lower housing part (42), which contains the valve member (28) and which determines the tilt axis (30); in that the membrane (92) is preferably of disk-like shape and/or in that the compensation means are preferably formed by openings (136, 138, or 128, 130) which open beneath the membrane (92) and which bring about a deformation of the membrane in the region of the openings under the action of pressure and press the membrane against the valve member (28).

4. Valve in accordance with claim 3,
characterised in that
the openings which form the compensation means have opening cross sections which take account of the forces required for the deformation of the membrane.

5. Valve in accordance with one of the preceding claims,
characterised in that
the compensation means are formed by piston-like thrust members.

6. Valve in accordance with claim 3,
characterised in that
the valve openings (56, 58) and also the openings (136, 138; 128, 130) which are required for the compensation means are formed in a valve plate (54) insertable in the lower part of the housing, and in that the flow connections (120, 122) from the inlet side to the first compensation means (138, 133) and from the outlet side to the second compensation means (136, 133) are preferably formed by corresponding passages in a disk insertable beneath the membrane into the lower part (42) of the housing, or, as a possible alternative, the flow connections from the inlet side to the first compensation means and from the outlet side to the second compensation means are formed beneath the valve plate in the latter.

7. Valve in accordance with one of the claims 3 to 6,
characterised in that
the valve member (28) is of approximately disk-like shape and has downwardly projecting spigots (116, 118) which are arranged above the valve openings (56, 58) and on closing of the respective valve openings press the membrane (92) against the valve seat formed around the respective valve opening, and preferably in that the valve member (28) has further downwardly projecting spigots (133) which are arranged above the compensation openings (136, 138 and 128, 130) respectively.

8. Valve in accordance with claim 7,
characterised in that
the upper part of the housing has an approximately circular recess (98) for the disk-like valve member (28), with the recess being terminated at the bottom by a transverse wall (100) which has openings for the spigots (116, 118 and 133) respectively, in order to enable the cooperation of the valve member with the membrane (92) or with the compensation means, with the transverse wall restricting the possibility of movement of the membrane (92) and holding the latter against the valve plate (54), and preferably in that the valve member has a central opening through which a support (102) projects upwardly from the transverse wall; and in that the tilt axis (30) is formed by a pin (104) which extends over a diameter of the disk-like valve member (28) and is supported at its ends and/or at its central region in respective mounts (106, 108 and/or 110) of the housing upper part, with the mounts being formed by upwardly open notches and with the pin (104) being held in the mounts by a plate (23) of an actuating device, which can be secured to the upper housing part, with the valve member preferably having mounts (112, 114) on both sides of the support (102) for the pin (104) forming the tilt axis (30).

9. Valve in accordance with one of the preceding claims,
characterised in that
the actuating device is an electromagnetic actuating device (12), with this device pressing a thrust member (20) against the one arm of the valve member (28) with a resetting device, for example a resetting spring (26), acting preferably on the other arm of the valve member (28), and in that the thrust member is preferably formed by a ball (20).

10. Valve in accordance with one of the preceding claims,
characterised in that
the flow passage (50) leads from the inlet (46) through the first valve opening (56), through a space (82) formed between the first valve opening (56) and the second valve opening (58) and then through the second valve opening (58) to the outlet (48), with a further connection (90) to the space (82) being providable, if required.

11. Valve in accordance with one of the preceding claims,
characterised in that
it serves as a pilot control valve for a membrane valve, in particular for a membrane valve in accordance with the published European application with the publication number 0 341 340.

12. Valve in accordance with claim 11,
characterised in that
the membrane valve contains a hose-like membrane (150) provided within a cylindrical bore (169) of the lower housing part (42), supported by inner support bodies (156 and 158) respectively and cooperating with a valve seat (152) formed by a transverse or partition wall (154) carried by one of these support bodies, wherein a ring-space (168) is provided between this hose-like membrane (150) and the cylinder bore (169) of the lower housing part (42) which accommodates the membrane, and wherein, depending on the position of the pilot valve, ring space is either capable of being acted on by the pressure prevailing at the inlet side (160) and hereby contacts the valve seat of the partition wall, or is relieved to the outlet side (162), whereby the hose-like membrane lifts from the partition wall (154), i.e. from the valve seat (152) as a result of the pressure prevailing at the input side (160) and enables a flow through the membrane valve from the input (160) through openings provided in the support body (156) and over the partition wall (154) through openings provided in the support body (158) to the outlet (162).

## Revendications

1. Valve, constituée par un boîtier de valve (39), par un organe de valve (28) agencé en basculement autour d'un axe de basculement (30) dans le boîtier, qui sert à fermer ou à libérer des ouvertures de valve (56, 58) agencées sur des côtés opposés de l'axe de basculement (30) dans un canal d'écoulement (50) menant depuis une entrée (46) jusqu'à une sortie (48), les pressions régnant pendant le fonctionnement au niveau des ouvertures de valve exerçant des couples de basculement sur l'organe de valve, et par des dispositifs (120, 138, 133 ; 122, 136, 133) agencés des deux côtés de l'axe de basculement et provoquant des couples de basculement de compensation sur l'organe de valve (28), dans laquelle lesdits couples de basculement et les couples de basculement de compensation s'annulent au moins sensiblement les uns les autres dans toutes les positions de l'organe de valve, et par un dispositif d'actionnement (12) pilotant l'organe de valve et amenant celui-ci à un mouvement de basculement, caractérisée en ce que tant les ouvertures de valve (58) que les dispositifs de compensation (120, 138, 133 ; 122, 136, 133) se trouvent du moins sensiblement dans un seul plan.

2. Valve selon la revendication 1, caractérisée en ce que les dispositifs de compensation sont constitués par un premier dispositif (138, 133) agencé du côté sortie de la valve et sollicité par la pression du côté entrée de la valve, et par un second dispositif (136, 133) agencé du côté entrée de la valve et sollicité par la pression du côté sortie de la valve.

3. Valve selon l'une ou l'autre des revendications 1 et 2, caractérisée en ce qu'elle est constituée par une partie de boîtier inférieure (42) qui comporte l'ouverture d'entrée (46), l'ouverture de sortie (48), le canal d'écoulement (50), les ouvertures de valve (56, 58) et les dispositifs de compensation (122, 138, 133 ; 120, 136, 123), et par une membrane (92) recouvrant les ouvertures de valve et les dispositifs de compensation, ainsi que par une partie de boîtier supérieure (40) maintenant la membrane contre la partie de boîtier inférieure (42) et comportant l'organe de valve (28) et déterminant l'axe de basculement (30), en ce que la membrane (92) est réalisée de préférence sous forme de disque, et/ou en ce que les dispositifs de compensation sont formés de préférence par des ouvertures (136, 138 ou 128, 130) débouchant au-dessous de la membrane (92), qui provoquent sous l'effet d'une pression une déformation de la membrane dans la région des ouvertures et qui pressent celle-ci directement contre l'organe de valve (28).

4. Valve selon la revendication 3, caractérisée en ce que les ouvertures formant les dispositifs de compensation présentent des sections transversales d'ouverture qui tiennent compte des forces nécessaires pour la déformation de la membrane.

5. Valve selon l'une quelconque des revendications précédentes, caractérisée en ce que les dispositifs de compensation sont formés par des poussoirs en forme de piston.

6. Valve selon la revendication 3, caractérisée en ce que les ouvertures de valve (56, 58) ainsi que les ouvertures (136, 138 ; 128, 130) nécessaires pour les dispositifs de compensation sont ménagées dans une plaque de valve (54) susceptible d'être mise en place dans la partie inférieure du boîtier, et en ce que les liaisons d'écoulement (120, 122) depuis le côté entrée jusqu'au premier dispositif de compensation (138, 133) et depuis le côté sortie jusqu'au second dispositif de compensation (136, 133) sont réalisées de préférence par des canaux correspondants dans un disque (52) susceptible d'être mis en place au-dessous de la membrane dans la partie inférieure (42) du boîtier, ou en ce que, comme variante possible, les liaisons d'écoulement depuis le côté entrée jusqu'au premier dispositif de compensation et depuis le côté sortie jusqu'au second dispositif de compensation sont réalisées au-dessous de la plaque de valve dans celle-ci.

7. Valve selon l'une quelconque des revendications 3 à 6, caractérisée en ce que l'organe de valve (28) est réalisé approximativement sous forme de disque et présente des tenons (116, 118) faisant saillie vers le bas, qui sont agencés au-dessus des ouvertures de valve (56, 58) et qui, lors de la fermeture des ouvertures de valve respectives, pressent la membrane (92) contre le siège de valve formé autour de l'ouverture de valve respective, et de préférence en ce que l'organe de valve (28) présente d'autres tenons (133) faisant saillie vers le bas qui sont agencés au-dessus des ouvertures de compensation (136, 138 ou 128, 130).

8. Valve selon la revendication 7, caractérisée en ce que la partie supérieure (40) du boîtier présente un logement (98) approximativement circulaire pour l'organe de valve (28) en forme de disque, le logement étant fermé en bas par une paroi transversale (100) qui présente des ouvertures pour les tenons (116, 118 ou 133) pour permettre la coopération de l'organe de valve avec la membrane (92) ou avec les dispositifs de compensation, la paroi transversale limitant la possibilité de mouvement de la membrane (92) et la maintenant contre la plaque de valve (54), et de préférence en ce que l'organe de valve présente une ouverture médiane à travers laquelle pénètre un support (102) dépassant depuis la paroi transversale vers le haut, et en ce que l'axe de basculement (30) est formé par une tige (104) qui s'étend sur un diamètre de l'organe de valve (28) en forme de disque et qui est supportée à ses extrémités ou dans sa zone médiane dans des logements respectifs (106, 108 ou 110) de la partie de boîtier supérieure, les logements étant formés par des entailles ouvertes vers le haut et la tige (104) étant retenue dans les logements par une plaque (23) d'un dispositif d'actionnement susceptible d'être fixé sur la partie de boîtier supérieure, l'organe de valve présentant de préférence sur les deux côtés du support (102) des logements (112, 114) pour la tige (104) qui forme l'axe de basculement (30).

9. Valve selon l'une quelconque des revendications précédentes, caractérisée en ce que le dispositif d'actionnement est un dispositif d'actionnement électromagnétique (12) qui presse un poussoir (20) contre l'un des bras de l'organe de valve (28), un dispositif de rappel, par exemple un ressort de rappel (26) agissant de préférence sur l'autre bras de l'organe valve (28), et en ce que le poussoir est formé de préférence par une bille (20).

10. Valve selon l'une quelconque des revendications précédentes, caractérisée en ce que le canal d'écoulement (50) mène depuis l'entrée (46) à travers la première ouverture de valve (56), à travers une chambre (82) formée entre la première ouverture de valve (56) et la seconde ouverture de valve (58), et ensuite à travers la seconde ouverture de valve (58) jusqu'à la sortie (48), et l'on peut prévoir éventuellement une autre liaison de raccordement (90) à la chambre (82).

11. Valve selon l'une quelconque des revendications précédentes, caractérisée en ce qu'elle sert comme valve pilote à une valve à membrane, en particulier à une valve à membrane selon la demande de brevet européen publiée portant le numéro de publication 0 341 340.

12. Valve selon la revendication 11, caractérisée en ce que la valve à membrane comporte une membrane (150) en forme de tuyau qui est prévue à l'intérieur d'un perçage cylindrique (169) de la partie de boîtier inférieure (42), qui est supportée par des corps de support intérieurs (156 ou 158) et qui coopère avec un siège de valve (152) formé par une paroi transversale ou de séparation (154) portée par l'un de ces corps de support, dans laquelle entre cette membrane (150) en forme de tuyau et le perçage cylindrique (169) qui la reçoit de la partie de boîtier inférieure (42) est prévue une chambre annulaire (168) qui est, selon la position de la valve pilote, soit sollicitée par la pression régnant du côté entrée (160) et s'appuie ainsi contre le siège de valve de la paroi de séparation, soit déchargée vers le côté sortie (162), suite à quoi la membrane en forme de tuyau se soulève par rapport à la paroi de séparation (154) ou par rapport au siège de valve (152) en raison de la pression régnant du côté entrée (160), et permet un écoulement à travers la valve à membrane depuis l'entrée (160) à travers les ouvertures prévues dans le corps de support (156) via la paroi de séparation (154) à travers des ouvertures prévues dans le corps de support (158) jusqu'à la sortie (162).
